# EUROPÄISCHE PATENTSCHRIFT

(11) **EP 2 951 060 B1**
(45) Veröffentlichungstag und Bekanntmachung des Hinweises auf die Patenterteilung: **15.03.2017**
(21) Anmeldenummer: 14701291.8
(22) Anmeldetag: 23.01.2014
(51) Int. Cl.: B60R 5/04, B60R 7/02, F16B 21/16

(54) **ANORDNUNG ZUM BEFESTIGEN EINER FUNKTIONSBAUGRUPPE IN EINEM FAHRZEUG**
ARRANGEMENT FOR SECURING A FUNCTIONAL ASSEMBLY IN A VEHICLE
DISPOSITIF POUR FIXER UN MODULE FONCTIONNEL DANS UN VÉHICULE

(30) Priorität: 04.02.2013 DE 102013001947; 27.09.2013 DE 102013016132
(43) Veröffentlichungstag der Anmeldung: 09.12.2015
(73) Patentinhaber: Audi AG, 85045 Ingolstadt (DE); Kipp GmbH&Co. KG, 72172 Sulz am Neckar (DE)
(72) Erfinder: KIZILKAN, Zeki, 74172 Neckarsulm (DE); FISCHER, Sascha, 72186 Empfingen (DE); STAIGER, Patrick, 78727 Oberndorf-Beffendorf (DE)
(74) Vertreter: Mader, Wilfried
(86) Internationale Anmeldenummer: PCT/EP2014/000175
(87) Internationale Veröffentlichungsnummer: WO 2014/117923

(56) Entgegenhaltungen:
- EP-A1- 2 436 562
- DE-A1- 19 725 489
- DE-A1-102010 030 666
- US-A1- 2012 213 576
- US-A1- 2012 243 932

## Beschreibung

Die Erfindung betrifft eine Anordnung zum Befestigen einer ein Befestigungselement aufweisenden Funktionsbaugruppe in einem Fahrzeug an einem mit dem Befestigungselement lösbar verrastbaren.Aufnahmeelement.

Eine gattungsbildende Anordnung zum Befestigen einer ein Befestigungselement aufweisenden Funktionsbaugruppe, nämlich eine Rückhaltevorrichtung mit einer Rückhaltebahn zum Halten von Lasten im Kofferraum eines Fahrzeugs ist aus der DE 197 25 489 A1 bekannt, bei welcher das als Haltestange ausgebildete Befestigungselement mit einem als Bundhülse ausgebildeten Aufnahmeelement, welches in den Kofferraumboden des Fahrzeugs eingelassen ist, mittels einer Bajonettanordnung oder mit einer Feder- bzw. Kugelrastanordnung lösbar verrastet ist. Über den Laderaumboden ist eine Anzahl von Sticköffnungen rasterartig verteilt, so dass in Anzahl und Größe unterschiedliche Ladegüter auf dem Kofferraumboden mittels der Rückhaltebahn fixiert werden können.

Des Weiteren ist aus der US 2012/213576 A1 eine Kugelrastverbindungsanordnung mit einem Kugelelement bekannt, bei welcher das Befestigungselement einen mit dem Kugelelement in Wirkverbindung stehenden Betätigungsstößel aufweist, welcher in einer federkraftvorgespannten ersten Position das Kugelelement zum Verrasten in einer Rastaufnahme hält und in einer zweiten Position das Freigeben der Rastaufnahme durch das Kugelelement bewirkt. Der Betätigungsstößel wird endseitig in einer verschiebbaren Hülse geführt, in der diametral gegenüberliegende Kugelaufnahmeöffnungen zur Aufnahme von Kugelelementen vorgesehen sind und in eine Steckhülse mit einer Rastaufnahme für die Kugelelemente zusammen mit dem Bestätigungsstößen einführbar ist. Der Betätigungsstößel weist einen Endabschnitt mit einem dem Innendurchmesser der Hülse entsprechenden Durchmesser auf, so dass in der ersten Position des Betätigungsstößels die Kugelelemente durch die Kugelaufnahmeöffnungen radial nach außen in eine Rastaufnahme der Steckhülse gedrückt werden. Bei einer Betätigung des Betätigungsstößel in Richtung der zweiten Position bewegt sich ein Abschnitt des Betätigungsstößel mit kleinerem Durchmesser in den Bereich der Kugelelemente, so dass diese radial nach innen verlagert werden und dadurch bei weiterer Bewegung des Betätigungsstößels in die zweite Position zusammen mit der Hülse aus den Bereich der Rastaufnahme der Steckhülse bewegt werden. Außerhalb der Rastaufnahme der Steckhülse werden die Kugelelemente von der Innenwandung der Rastaufnahme am Herausfallen gehindert.

Weiterhin ist aus der DE 10 2010 030 666 A1 eine Anordnung bekannt, bei der Halterungsbauteile als Befestigungselemente einer Funktionsbaugruppe jeweils mittels eines Steckzapfens in im Laderaumboden eines Fahrzeugs angeordnete Steckhülsen als Aufnahmeelemente unter Verrastung mit denselben eingeführt werden. Diese bekannte Funktionsbaugruppe stellt eine Rückhaltevorrichtung dar, bei der die Halterungsbauteile Haltestangen aufweisen, die über Textilbahnen miteinander verbunden sind, so dass der Laderaumboden in Abschnitte unterteilbar wird, in denen Ladegut durch die Textilbahnen gegen Verrutschen gesichert werden.

In der Steckhülse ist zum Verrasten der Steckzapfen eine Verrastungsfeder angeordnet, die über in waagerechter Richtung verlaufende Führungen verschiebbar gehalten wird, wobei der Steckzapfen Mittel zur Verrastung mit den Armen der Verrastungsfeder aufweist. Diese Mittel sind als schräge und gegebenenfalls gerade Abschnitte an dem Steckzapfen zum Verschieben des jeweiligen Armes der Verrastungsfeder ausgebildet, so dass sich durch schräge und gegebenenfalls gerade Abschnitte des Steckzapfens gebildete Übergangsbereiche eine Verrastungsposition unter Verrastung der Arme der Verrastungsfeder ergibt.

Die Befestigungselemente sind durch Einführen von deren Steckzapfen jeweils in eine Steckhülse montierbar. Zum Demontieren ist jedoch eine definierte Zugkraft erforderlich, um die Arme der Verrastungsfeder mittels der schrägen Abschnitte an dem Steckzapfen aus der Verrastungsposition auseinanderzudrücken, so dass das Befestigungselement aus der Steckhülse gezogen werden kann.

Der Steckzapfen dieses bekannten Befestigungselementes als auch die zugehörige Steckhülse weisen komplizierte Konturen auf, die zu hohen Herstellkosten führen. Desweiteren erfordert in nachteiliger Weise die Demontage eines Befestigungselementes aus der Steckhülse eine bestimmte Zugkraft, wodurch die Handhabbarkeit erschwert wird.

Ausgehend von diesem Stand der Technik ist es Aufgabe der Erfindung eine Anordnung der eingangs genannten Art anzugeben, bei welcher sowohl die Montage als auch die Demontage des Befestigungselementes einer Funktionsbaugruppe in einem Aufnahmeelement einfach und leicht durchführbar ist, ohne dass hierzu eine aufwendige Konstruktion für das Befestigungselement und das Aufnahmeelement erforderlich wäre.

Diese Aufgabe wird gelöst durch eine Anordnung mit den Merkmalen des Patentanspruchs 1.

Eine solche Anordnung zum Befestigen einer ein Befestigungselement aufweisenden Funktionsbaugruppe in einem Fahrzeug mit einem mit dem Befestigungselement lösbar verrastbaren Aufnahmeelement, bei welcher zur Bildung einer Kugelrasteinrichtung wenigstens ein in dem Befestigungselement gelagertes Kugelelement vorgesehen ist, welches zum Verrasten des Befestigungselementes mit dem Aufnahmeelement in eine korrespondierenden Rastaufnahme des Aufnahmeelementes verlagerbar ist, zeichnet sich erfindungsgemäß dadurch aus, dass
- das Befestigungselement einen mit dem Kugelelement in Wirkverbindung stehenden Betätigungsstößel aufweist, welcher in einer ersten Position das Kugelelement zum Verrasten in der Rastaufnahme hält und in einer zweiten Position das Freigeben der Rastaufnahme durch das Kugelelement bewirkt,
- der Betätigungsstößel mittels eines Federelementes federkraftvorgespannt in der ersten Position gehalten wird, und
- das Aufnahmeelement zum Befestigen in einer Schiene ausgebildet ist, wobei das Aufnahmeelement eine Klemmvorrichtung zum Verschieben und Klemmen des Aufnahmeelementes in der Schiene aufweist.

Mit einer solchen erfindungsgemäßen Anordnung wird ein leichtes Entnehmen dadurch möglich, dass durch manuelle Betätigung des Betätigungsstößels eine Entrastung der Kugelrasteinrichtung erfolgt und dadurch mühelos die Funktionsbaugruppe mit dem Befestigungselement aus dem Aufnahmeelement entnommen werden kann. Dadurch wird die Handhabung der Funktionsbaugruppe besonders dann erleichtert, wenn die in einem Laderaum montierte Funktionsbaugruppe mindestens zwei solcher Befestigungselemente umfasst, die zur Sicherung von Ladegut in einem Laderaum eines Fahrzeugs über Halteelemente, wie bspw. Teleskopstangen oder Textilbahnen miteinander verbunden sind. Das Entnehmen einer solchen Funktionsbaugruppe mit zwei Befestigungselementen erfolgt dann in einem Bewegungsablauf, da jedes der beiden Befestigungselemente mit jeweils einer Hand entriegelt und aus den Aufnahmeelementen entnommen werden kann.

Mit der Ausbildung des Aufnahmeelementes als Klemmvorrichtung zum Verschieben rund Klemmen in einer Schiene kann das Befestigungselement der Funktionsbaugruppe flexibel entlang der Schiene angeordnet werden. Dies ist besonders vorteilhaft, wenn die Schiene in einem Laderaum des Fahrzeugs, vorzugsweise auf dessen Laderaumboden angeordnet ist.

Schließlich ist die erfindungsgemäße Anordnung durch Verwendung einer Kugelrasteinrichtung konstruktiv einfach und damit auch kostengünstig realisierbar.

In einer vorteilhaften Ausgestaltung weist das Befestigungselement zur Führung des Betätigungsstößels und zur Aufnahme des Kugelelementes einen hohlzylindrischen Zapfenabschnitt auf, welcher in eine die Rastaufnahme aufweisende Steckhülse des Aufnahmeelementes einführbar ist. Vorzugsweise weist hierzu der hohlzylindrische Zapfenabschnitt im Wandbereich eine Kugelaufnahmeöffnung zur verschieblichen Lagerung des Kugelelementes auf. Die Fixierung des Befestigungselementes über den Zapfenabschnitt in der Steckhülse des Aufnahmeelementes wird dadurch verbessert, dass die Kugelrasteinrichtung mit zwei diametral gegenüberliegenden Kugelelementen ausgeführt ist.

Besonders vorteilhaft ist es, wenn weiterbildungsgemäß der Betätigungsstößel einen ersten Abschnitt mit einem dem Innendurchmesser des Zapfenabschnittes entsprechenden Durchmesser aufweist, derart dass in der ersten Position des Betätigungsstößels das Kugelelement durch die Kugelaufnahmeöffnung in die Rastaufnahme gedrückt wird. Damit lässt sich eine sichere Verrastung des Zapfenabschnittes mit der Steckhülse erzielen, .ohne dass weitere bewegliche Funktionselemente erforderlich wären.

Desweiteren weist gemäß einer weiteren Ausgestaltung der Erfindung der Betätigungsstößel einen zweiten Abschnitt mit einem gegenüber dem Innen-durchmesser des Zapfenabschnittes kleineren Durchmesser auf, so dass in der zweiten Position eine die Entriegelung der Kugelrastvorrichtung bewirkende Verschiebung des Kugelelementes aus der Rastaufnahme erreicht wird. Dadurch wird in der zweiten Position des Betätigungsstößels im Bereich des Betätigungsstößels Raum geschaffen, so dass aufgrund der auf das Betätigungselement ausgeübten Kraft zum Entnehmen aus dem Aufnahmeelement das Kugelelement aus der Rastaufnahme gleiten kann. Auch für diese Funktion sind keine weiteren beweglichen Funktionselemente erforderlich.

In einer weiteren Ausgestaltung der Erfindung ist das Federelement als Druckfeder ausgebildet und auf dem Betätigungsstößel angeordnet, so dass sich die Druckfeder mit einem Ende gegen einen mit dem Betätigungsstößel verbundenen Anschlag und mit dem anderen Ende gegen das Befestigungselement abstützen kann.

Bei einer Funktionsbaugruppe mit wenigstens einem weiteren Befestigungselement können die Befestigungselemente durch Halteelemente verbunden werden, um so bspw. den Laderaum eines Fahrzeugs durch Abschnitte zu unterteilen, in die dann Ladegut verrutschsicher untergebracht werden kann. Die Halteelemente können als Teleskopstangen oder als Textilbahnen ausgebildet sein, wobei im Falle von Textilbahnen die Befestigungselemente zur Aufnahme der Textilbahnen mit einem Gurtabroller ausgestattet werden können.

Die Erfindung wird nachfolgend anhand von Ausführungsbeispielen unter Bezugnahme auf die beigefügten Figuren ausführlich beschrieben. Es zeigen:
- Figur 1: eine schematische und perspektivische Darstellung einer an einer in einem Laderaum eines Fahrzeugs montierten Schiene befestigten Funktionsgruppe in Teilansicht,
- Figur 2: eine Schnittdarstellung des Schnitts A-A nach Figur 1,
- Figur 3: eine Schnittdarstellung eines Befestigungselementes in einer gegenüber der Darstellung nach Figur 2 alternativen Ausführung, und
- Figur 4: eine schematische und perspektivische Darstellung der Funktionsbaugruppe in Teilansicht nach Figur 1 im demontierten Zustand.

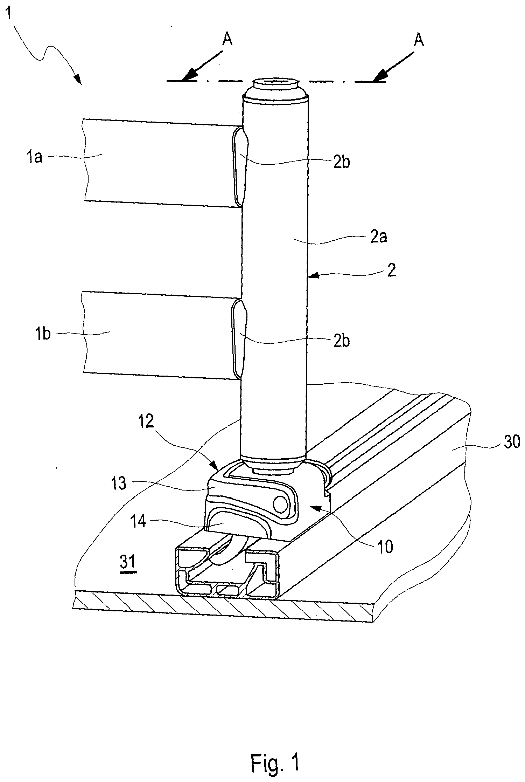

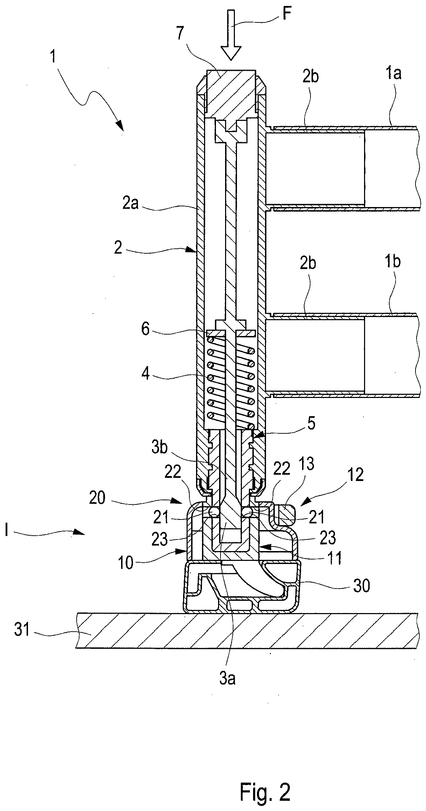

Die in Figur 1 in einer Teilansicht und in Figur 2 in einem Schnitt A-A dieser Teilansicht dargestellte Funktionsbaugruppe 1 ist auf dem schematisch angedeuteten Laderaumboden 31 eines Laderaums eines Fahrzeuges montiert und dient zur Sicherung von in diesem Laderaum abgelegtem Ladegut. Diese Funktionsbaugruppe 1 umfasst ein auf dem Laderaumboden 31 im Wesentlichen senkrecht angeordnetes, stabförmiges Befestigungselement 2, an welchem zwei Halteelemente 1 a und 1 b zur Sicherung des Ladegutes waagerecht angebunden sind. Dieses Befestigungselement 2 wird mit einem Aufnahmeelement 10, welches in einer Schiene 30 verschiebbar angeordnet ist, mittels einer Kugelrasteinrichtung 20 verrastet. Das Aufnahmeelement 10 weist eine Klemmvorrichtung 12 auf, so da^{g}s nach dem Lösen der Klemmvorrichtung 12 durch Drücken eines Betätigungsknopfes 14 das Aufnahmeelement 10 in eine gewünschte Position verschiebbar ist, um in dieser Position anschließend durch Loslassen des Betätigungsknopfes 14 der Klemmvorrichtung 12 mit der Schiene 30 verklemmt zu werden.

Die Funktionsbaugruppe 1 nach den Figuren 1 und 2 umfasst ein weiteres Befestigungselement (in den Figuren nicht dargestellt), mit welchem die beiden Halteelemente 1 a und 1 b verbunden sind. Dieses weitere Befestigungselement ist mit einem weiteren Aufnahmeelement verrastet, welches seinerseits ebenso in einer weiteren auf dem Laderaumboden 31 angeordneten Schiene an einer gewünschten Position befestigt ist. Die Halteelemente 1 a und 1 b können als Teleskopstangen oder auch als elastische Textilbahnen ausgeführt sein.

Das Befestigungselement 2 gemäß den Figuren 1 und 2 der Funktionsbaugruppe 1 umfasst einen Rohrkörper 2a, an dem zwei Flansche 2b zur Aufnahme der beiden Halteelemente 1 a und 1b angeformt sind und der einen verschiebbaren Betätigungsstößel 3 aufnimmt. Dieser Betätigungsstößel 3 wird am oberen Ende des Rohkörpers 2a von einem manuell betätigbaren Druckknopf 7 und am gegenüberliegenden Ende in einem hohlzylindrischen Zapfenabschnitt 5 geführt. Hierbei ist der Druckknopf 7 fest mit dem Betätigungsstößel 3 verbunden und verschiebbar in dem Rohrkörper 2a gelagert. Der Zapfenabschnitt 5 ragt über das Ende des Rohkörpers 2a hinaus und bildet einen Zapfen, mit dem das Befestigungselement 2 unter Bildung einer Rastverbindung mit dem Aufnahmeelement 10 in dessen Steckhülse 11 eingeführt werden kann, wobei die Rastverbindung mittels der Kugelrasteinrichtung 20 realisiert wird, deren Funktion nachfolgend erläutert wird.

Die Kugelrasteinrichtung 20 umfasst zwei diametral gegenüberliegende Kugelelemente 21, welche jeweils in einer Kugelaufnahmeöffnung 23 des Zapfenabschnittes 5 radial verschieblich gelagert sind. Der Betätigungsstößel 3 wirkt derart mit diesen Kugelelementen 21 zusammen, dass zur Verrastung des Befestigungselementes 2 mit dem Aufnahmeelement 10 die Kugelelemente 21 von dem Betätigungsstößel 3 teilweise jeweils in eine zugehörige Rastaufnahme 22 der Steckhülse 11 gedrückt werden, so dass hierdurch ein Herausziehen des Betätigungselementes 2 blockiert wird. Dies wird dadurch erreicht, dass das ein Ende des Betätigungsstößels 3 bildender erster Abschnitt 3a einen Durchmesser aufweist, der dem Innendurchmesser der Steckhülse 11 entspricht. Dadurch werden die Kugelelemente 21 durch diesen ersten Abschnitt 3a in die beiden Rastaufnahmen 22 gedrückt, da der Betätigungsstößel 3 durch ein als spiralförmige Druckfeder ausgebildetes Federelement 4 in dieser Position I gehalten wird. Diese Druckfeder 4 stützt sich zum einen an dem Zapfenabschnitt 5 und zum anderen an einem mit dem Betätigungsstößel 3 verbundenen Anschlag 6 ab, so dass dieser Betätigungsstößel 3 entgegen der Richtung F federvorgespannt ist.

Um das Befestigungselement 2 aus dem Aufnahmeelement 10 entnehmen zu können, muss zunächst die Kugelrasteinrichtung 20 entrastet werden.

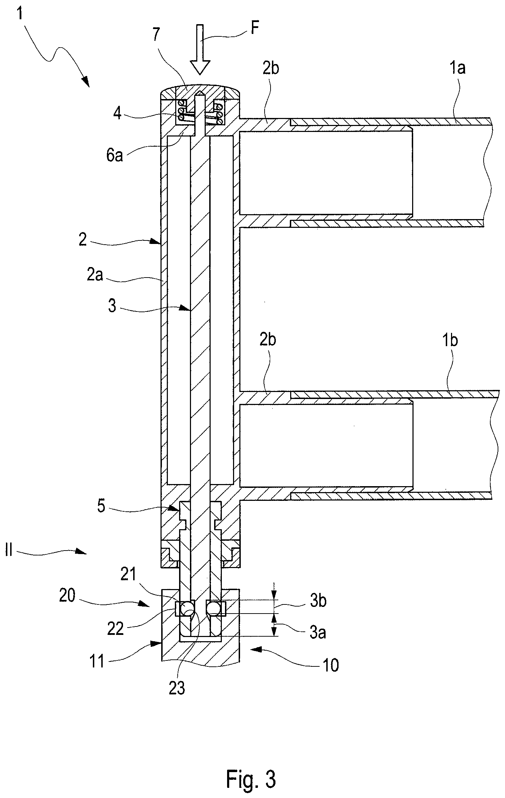

Hierzu wird der Druckknopf 7 manuell in Richtung F betätigt, wodurch der Betätigungsstößel 3 derart in dem Rohrkörper 2a in eine Position 1I verschoben wird, dass ein zweiter Abschnitt 3b des Betätigungsstößels 3 in die Radialebene der beiden Kugelelemente 21 gelangt. Dieser zweite Abschnitt 3b weist einen gegenüber dem ersten Abschnitt 3a geringeren Durchmesser auf, so dass jedes der beiden Kugelelemente 21 in den durch diesen zweiten Abschnitt 3b gebildeten Raum jeweils aus der Rastaufnahme 22 in Richtung des Betätigungsstößel 3 gleiten kann und dadurch von diesen Kugelelementen 21 die Verriegelung freigegeben wird, wie dies in Figur 3 dargestellt ist.

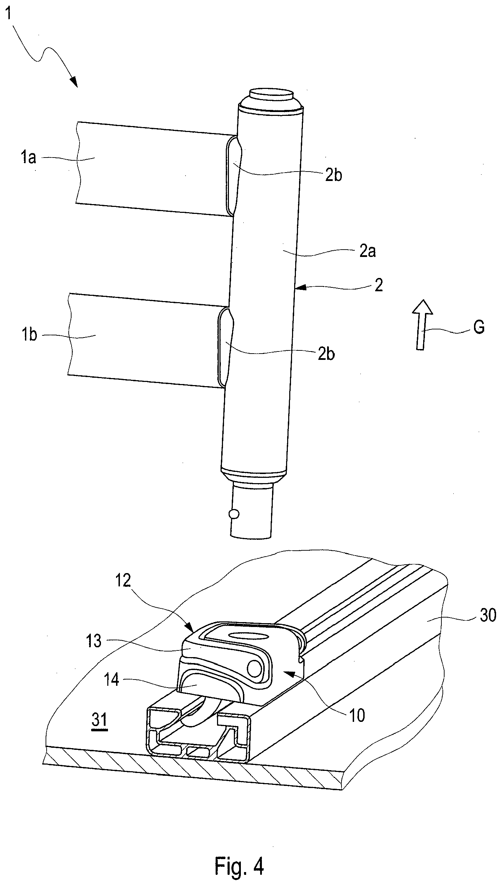

In dieser manuell gehaltenen Position II des Betätigungsstößels 3 kann das Betätigungselement 2 zusammen mit den Halteelementen 1a und 1b einhändig entsprechend der Darstellung nach Figur 4 aus dem Aufnahmeelement 10 in Richtung des Pfeils G entnommen werden. Gleichzeitig kann ein Benutzer mit seiner zweiten Hand das weitere mit den beiden Halteelemente 1 a und 1 b verbundene Befestigungselement (in den Figuren nicht dargestellt) in gleicher Weise aus dem zugehörigen Aufnahmeelement entnehmen und damit eine Demontage der Funktionsgruppe 1 aus dem Laderaum des Fahrzeuges ausführen.

Ist das Betätigungselement 2 zusammen mit den Halteelementen 1 a und 1 b demontiert, kann das Aufnahmeelement 10 zur Sicherung von Gegenständen im Laderaum des Fahrzeugs verwendet werden, indem ein Bügel 13 des Aufnahmeelementes 10 nach oben geklappt wird und die dadurch entstehende Öse als Zurrring zum Sichern einer Ladung mittels eines durch diese Öse geschleiften Zurrgurtes benutzt werden kann.

Das Befestigungselement 2 gemäß Figur 3 unterscheidet sich von demjenigen nach Figur 2 durch eine andere Anordnung des Federelementes 4 in dem Rohrkörper 2a des Befestigungselementes 2. Dieses Federelement 4 ist im oberen Bereich des Betätigungsstößel 3 angeordnet, derart dass es sich einerseits gegen den mit dem Betätigungsstößel 3 verbundenen Druckknopf 7 und andererseits gegen einen mit dem Rohrkörper 2a verbundenen Anschlag 6a abstützt.

### Bezugszeichen

- 1: Funktionsbaugruppe
- 1a: Halteelement der Funktionsgruppe
- 1b: Halteelement der Funktionsgruppe
- 2: Befestigungselement
- 2a: Rohrkörper des Befestigungselementes 2
- 2b: Flansch des Rohrkörpers 2a
- 3: Betätigungsstößel
- 3a: erster Abschnitt des Betätigungsstößels 3
- 3b: Zweiter Abschnitt des Betätigungsstößels 3
- 4: Federelement
- 5: Zapfenabschnitt
- 6: Anschlag
- 6a: Anschlag
- 7: Druckknopf

- 10: Aufnahmeelement
- 11: Steckhülse des Aufnahmeelementes 10
- 12: Klemmvorrichtung
- 13: Bügel der Klemmvorrichtung
- 14: Betätigungsknopf

- 20: Kugelrasteinrichtung
- 21: Kugelelement
- 22: Rastaufnahme
- 23: Kugelaufnahmeöffnung

- 30: Schiene
- 31: Laderaumboden des Fahrzeugs

## Patentansprüche

1. Anordnung zum Befestigen einer ein Befestigungselement (2) aufweisenden Funktionsbaugruppe (1) in einem Fahrzeug an einem mit dem Befestigungselement (2) lösbar verrastbaren Aufnahmeelement (10), wobei zur Bildung einer Kugelrasteinrichtung (20) wenigstens ein in dem Befestigungselement (2) gelagertes Kugelelement (21) vorgesehen ist, welches zum Verrasten des Befestigungselementes (2) mit dem Aufnahmeelement (10) in eine korrespondierenden Rastaufnahme (22) des Aufnahmeelementes (10) verlagerbar ist, **dadurch gekennzeichnet, dass**
- das Befestigungselement (2) einen mit dem Kugelelement (20) in Wirkverbindung stehenden Betätigungsstößel (3) aufweist, welcher in einer ersten Position (I) das Kugelelement (20) zum Verrasten in der Rastaufnahme (22) hält und in einer zweiten Position (11) das Freigeben der Rastaufnahme (22) durch das Kugelelement (20) bewirkt,
- der Betätigungsstößel (3) mittels eines Federelementes (4) federkraftvorgespannt in der ersten Position (I) gehalten wird, und
- das Aufnahmeelement (10) zum Befestigen in einer Schiene (30) ausgebildet ist, wobei das Aufnahmeelement (10) eine Klemmvorrichtung (12) zum Verschieben und Klemmen des Aufnahmeelementes in der Schiene (30) aufweist.

2. Anordnung nach Anspruch 1,
**dadurch gekennzeichnet, dass** die Schiene (30) im Laderaum auf dessen Laderaumboden (31) des Fahrzeugs angeordnet ist.

3. Anordnung nach Anspruch 1 oder 2,
**dadurch gekennzeichnet, dass** das Befestigungselement (2) zur Führung des Betätigungsstößels (3) und zur Aufnahme des Kugelelementes (20) einen hohlzylindrischen Zapfenabschnitt (5) aufweist, welcher in eine die Rastaufnahme (22) aufweisende Steckhülse (11) des Aufnahmeelementes (10) einführbar ist.

4. Anordnung nach Anspruch 3,
**dadurch gekennzeichnet, dass** der hohlzylindrische Zapfenabschnitt (5) im Wandbereich eine Kugelaufnahmeöffnung (23) zur verschieblichen Lagerung des Kugelelementes (20) aufweist.

5. Anordnung nach Anspruch 4,
**dadurch gekennzeichnet, dass** der Betätigungsstößel (3) einen ersten Abschnitt (3a) mit einem dem Innendurchmesser des Zapfenabschnittes (5) entsprechenden Durchmesser aufweist, derart dass in der ersten Position (I) des Betätigungsstößels (3) das Kugelelement (20) durch die Kugelaufnahmeöffnung (23) in die Rastaufnahme (22) gedrückt wird.

6. Anordnung nach Anspruch 4 oder 5,
**dadurch gekennzeichnet, dass** der Betätigungsstößel (3) einen zweiten Abschnitt (3b) mit einem gegenüber dem Innendurchmesser des Zapfenabschnittes (5) kleineren Durchmesser aufweist, derart dass in der zweiten Position (II) eine Entriegelung der Kugelrastvorrichtung (20) bewirkende Verschiebung des Kugelelementes (21) aus der Rastaufnahme (22) erreicht wird.

7. Anordnung nach einem der vorhergehenden Ansprüche,
**dadurch gekennzeichnet, dass** das Federelement (4) als Druckfeder ausgebildet und auf dem Betätigungsstößel (3) angeordnet ist, wobei sich die Druckfeder (4) mit einem Ende gegen einen mit dem Betätigungsstößel (3) verbundenen Anschlag (6, 7) und mit dem anderen Ende gegen das Befestigungselement (2) abstützt.

8. Anordnung nach einem der vorhergehenden Ansprüche,
**dadurch gekennzeichnet, dass** die Funktionsgruppe (1) wenigstens ein weiteres Befestigungselement aufweist, wobei die Befestigungselemente durch Halteelemente (1 a, 1b) verbunden sind.

## Claims

1. Arrangement for fastening a functional module (1) in a vehicle, said functional module having a fastening element (2), to a receiving element (10) that is able to be locked in place releasably with the fastening element (2), wherein to form a ball catch device (20), at least one ball element (21) mounted in the fastening element (2) is provided, which is able to be shifted to lock the fastening element (2) in place with the receiving element (10) in a corresponding catch receiver (22) of the receiving element (10), **characterised in that**
- the fastening element (2) has an actuating tappet (3) in operative connection with the ball element (20), said actuating tappet holding the ball element (20) in a first position (I) for locking in place in the catch receiver (22) and causing the release of the catch receiver (22) by the ball element (20) in a second position (II),
- the actuating tappet (3) is held in the first position (I), preloaded with spring force by means of a spring element (4), and
- the receiving element (10) is formed for fastening in a rail (30), wherein the receiving element (10) has a clamping device (12) for moving and clamping the receiving element in the rail (30).

2. Arrangement according to Claim 1, **characterised in that** the rail (30) is arranged in the storage space on the storage space base (31) thereof of the vehicle.

3. Arrangement according to Claim 1 or 2, **characterised in that** the fastening element (2) has a hollow cylindrical pin section (5) for guiding the actuating tappet (3) and for receiving the ball element (20), said pin section being able to be introduced into a plug-in sleeve (11) of the receiving element (10) having the catch receiver (22).

4. Arrangement according to Claim 3, **characterised in that** the hollow cylindrical pin section (5) has a ball receiver opening (23) in the wall region for moveable mounting of the ball element (20).

5. Arrangement according to Claim 4, **characterised in that** the actuating tappet (3) has a first section (3a) having a diameter corresponding to the inner diameter of the pin section (5), such that in the first position (I) of the actuating tappet (3), the ball element (20) is pushed into the catch receiver (22) through the ball receiver opening (23).

6. Arrangement according to Claim 4 or 5, **characterised in that** the actuating tappet (3) has a second section (3b) having a smaller diameter compared to the inner diameter of the pin section (5), such that in the second position (II), a movement of the ball element (21) from the catch receiver (22) causing the unlocking of the ball catch device (20) is achieved.

7. Arrangement according to one of the preceding claims, **characterised in that** the spring element (4) is formed as a compression spring and is arranged on the actuating tappet (3), wherein the compression spring (4) is supported with one end against a stop (6, 7) connected to the actuating tappet (3) and with the other end against the fastening element (2).

8. Arrangement according to one of the preceding claims, **characterised in that** the functional group (1) has at least one further fastening element, wherein the fastening elements are connected by holding elements (1a, 1b).

## Revendications

1. Dispositif pour fixer un module fonctionnel (1), comportant un élément de fixation (2), dans un véhicule au niveau d'un élément de logement (10) pouvant être verrouillé de manière amovible avec l'élément de fixation (2), au moins un élément à billes (21) logé dans l'élément de fixation (2) étant prévu pour former un dispositif de verrouillage à billes (20), lequel élément à billes peut être déplacé dans un logement de verrouillage (22) correspondant de l'élément de logement (10) pour verrouiller l'élément de fixation (2) avec l'élément de logement (10),
**caractérisé en ce que**
- l'élément de fixation (2) comporte un poussoir d'actionnement (3) qui est en liaison active avec l'élément à billes (20) et qui, dans une première position (1), maintient l'élément à billes (20) pour le verrouillage dans le logement de verrouillage (22) et, dans une deuxième position (II), provoque la libération du logement de verrouillage (22) par l'élément à billes (20),
- le poussoir d'actionnement (3) est maintenu dans la première position (I) par une précontrainte de force de ressort au moyen d'un élément ressort (4), et
- l'élément de logement (10) est conçu pour une fixation dans un rail (30), l'élément de logement (10) comportant un dispositif de serrage (12) pour déplacer et serrer l'élément de logement dans le rail (30).

2. Dispositif selon la revendication 1, **caractérisé en ce que** le rail (30) est agencé dans le coffre à bagages sur le plancher (31) dudit coffre à bagages du véhicule.

3. Dispositif selon la revendication 1 ou 2, **caractérisé en ce que** l'élément de fixation (2) comporte un tronçon à dents (5) cylindrique creux qui sert au guidage du poussoir d'actionnement (3) et au logement de l'élément à billes (20) et qui peut être introduit dans un manchon d'enfichage (11), comportant le logement de verrouillage (22), de l'élément de logement (10).

4. Dispositif selon la revendication 3, **caractérisé en ce que** le tronçon à dents (5) cylindrique creux comporte, dans la zone de paroi, une ouverture de logement à billes (23) pour loger l'élément à billes (20) de manière à permettre sa translation.

5. Dispositif selon la revendication 4, **caractérisé en ce que** le poussoir d'actionnement (3) comporte un premier tronçon (3a) avec un diamètre correspondant au diamètre intérieur du tronçon à dents (5) de telle sorte que, dans la première position (I) du poussoir d'actionnement (3), l'élément à billes (20) est poussé via l'ouverture de logement à billes (23) dans le logement de verrouillage (22).

6. Dispositif selon la revendication 4 ou 5, **caractérisé en ce que** le poussoir d'actionnement (3) comporte un deuxième tronçon (3b) avec un diamètre inférieur au diamètre intérieur du tronçon à dents (5) de sorte que, dans la deuxième position (II), on obtient une translation, provoquant un déverrouillage du dispositif de verrouillage à billes (20), de l'élément à billes (21) hors du logement de verrouillage (22).

7. Dispositif selon l'une des revendications précédentes, **caractérisé en ce que** l'élément ressort (4) est conçu comme un ressort de pression et est agencé sur le poussoir d'actionnement (3), le ressort de pression (4) s'appuyant avec une extrémité contre une butée (6, 7) reliée au poussoir d'actionnement (3) et avec l'autre extrémité contre l'élément de fixation (2).

8. Dispositif selon l'une des revendications précédentes, **caractérisé en ce que** le module fonctionnel (1) comporte au moins un autre élément de fixation, les éléments de fixation étant reliés par des éléments de retenue (1a, 1b).
